# EUROPÄISCHE PATENTSCHRIFT

(11) **EP 3 797 444 B1**
(45) Veröffentlichungstag und Bekanntmachung des Hinweises auf die Patenterteilung: **12.01.2022**
(21) Anmeldenummer: 19707757.1
(22) Anmeldetag: 22.02.2019
(51) Int. Cl.: H01M 50/50, H01M 50/502

(54) **BATTERIEZELLENVERBINDER**
BATTERY CELL CONNECTOR
CONNECTEUR D'ÉLÉMENTS DE BATTERIE

(30) Priorität: 23.05.2018 DE 102018112313
(43) Veröffentlichungstag der Anmeldung: 31.03.2021
(73) Patentinhaber: Auto-Kabel Management GmbH, 79688 Hausen i.W. (DE)
(72) Erfinder: SCHARKOWSKI, Oliver, 79669 Zell im Wiesental (DE)
(74) Vertreter: Cohausz & Florack
(86) Internationale Anmeldenummer: PCT/EP2019/054433
(87) Internationale Veröffentlichungsnummer: WO 2019/223912

(56) Entgegenhaltungen:
- DE-A1-102011 015 040
- DE-A1-102015 103 092
- US-A1- 2013 306 353

## Beschreibung

Der Gegenstand betrifft einen Batteriezellenverbinder. Ein gegenständlicher Batteriezellenverbinder kann als Baugruppe gebildet sein und eingerichtet sein zum elektrisch leitenden Verbinden eines ersten Zellterminals einer ersten elektrochemischen Zelle einer elektrochemischen Vorrichtung mit einem zweiten Zellterminal einer zweiten elektrochemischen Zelle der elektrochemischen Vorrichtung. Eine elektrochemische Vorrichtung ist insbesondere eine Batterie, bevorzugt eine Kraftfahrzeugbatterie. Eine solche Batterie kann beispielsweise eine Batterie eines Antriebstrangs des Kraftfahrzeugs sein.

In rein batteriebetriebenen elektrischen Fahrzeugen (BEV) als auch in Plug-in-Hybrid elektrischen Fahrzeugen (PHEV), insbesondere Automobilen, Zweirädern, Schiffen, Luftschiffen und dergleichen, kommen vermehrt Batterien zum Einsatz, bei denen eine Vielzahl an elektrochemischen Zellen miteinander in Reihe und/oder parallel zueinander geschaltet werden. Jede einzelne Zelle weist eine an und für sich geringe Speicherkapazität als auch eine geringe Zellspannung, beispielsweise von 4,8 V auf. Durch das Zusammenschalten mehrerer Zellen können aber hohe Batteriekapazitäten bei gleichzeitig hohen Spannungen realisiert werden. Batteriezellen können beispielsweise Lithium-Ionen-Batteriezellen sein.

Aufgrund der hohen Stromflüsse in Fahrzeugen, beispielsweise bei der Verwendung von Batterien als Energiespeicher für den Antriebsstrang, ist es notwendig, die Batteriezellen untereinander mit geringen Übergangswiderständen zu verbinden. Hierzu eignen sich insbesondere sogenannte Batteriezellenverbinder, die an sich bekannt sind. Die Batteriezellenverbinder werden in der Regel an die Pole der Zellterminals angeschweißt, so dass eine stoffschlüssige Verbindung gebildet ist. Über diese stoffschlüssige Verbindung fließt der Strom zwischen den einzelnen Zellen. Die stoffschlüssige Verbindung bietet einen geringen Übergangswiderstand, hat jedoch den Nachteil, dass sie gegenüber mechanischen Belastungen instabil sein kann, insbesondere bei Vibrationen und dauerhaften mechanischen Belastungen brechen kann.

Insbesondere in Anwendungen, in denen die Umweltbedingungen stark schwanken können oder in denen sich die Batterien stark aufheizen, kann es zum sogenannten "swelling" kommen. Das Swelling kann auch aufgrund altersbedingter Veränderung der Materialstruktur oder Dimensionen der Zellen relevant sein. Bei diesem Phänomen kommt es z.B. aufgrund von Temperaturschwankungen zu Längenänderungen des Zellverbinders und/oder der Zellterminals. Ein Zellverbinder ist in der Regel ein Flachteil, welches zwischen den Terminals der Batteriezellen angeordnet ist. Die durch die Temperaturveränderung bewirkte Längenänderung des Flachteils führt zu einer mechanischen Belastung der Verbindung des Flachteils mit dem Batterieterminal, welche im ungünstigsten Fall zu einem Bruch der elektrischen Verbindung führen kann.

Um die mechanische Belastung durch das Swelling zu verringern, sind Zellverbinder bekannt, bei denen das Flachteil, auch BusBar genannt, zwischen zwei jeweils an einem Terminal der Batterieklemme angeordneten Klammern angeordnet ist. So ist beispielsweise aus der DE 10 2013 212 348 A1 eine Zellverbinderbaugruppe bekannt, bei der ein Kontaktelement über eine Haltevorrichtung mit dem Zellverbinder verbunden ist. Die Haltevorrichtung ist dergestalt, dass der Zellverbinder in dem Kontaktelement sich zumindest in Längsrichtung ausdehnen kann. Die DE 10 2015 103 092 betrifft ein Verfahren zum Herstellen elektrischer Verbindungen zwischen Zellen innerhalb einer Batterie und insbesondere ein verbessertes Verfahren zum Schweißen einer Sammelschiene in einer Batterie. Die US 2013/0306353 beschreibt einen bimetallischen Batteriezellenverbinder.

Die aus dem Stand der Technik bekannte Baugruppe weist jedoch den Nachteil auf, dass die Haltekraft des Zellverbinders in dem Kontaktelement über eine hierfür eingerichtete Haltevorrichtung aufgebracht werden muss. Die Haltevorrichtung ist einerseits komplex in der Herstellung und andererseits fehleranfällig.

Aus diesem Grunde lag dem Gegenstand die Aufgabe zugrunde, einen Zellverbinder zur Verfügung zu stellen, bei dem die Haltevorrichtung als Anschlussklemme gebildet ist und in ihren mechanischen Eigenschaften optimiert ist.

Gegenständlich ist erkannt worden, dass die Anschlussklemme zwei Bedingungen erfüllen muss. Einerseits muss die Anschlussklemme dazu geeignet sein, das Flachteil, welches zum Verbinden der Zellen eingesetzt wird, klemmend zu halten und andererseits muss ein guter elektrischer Kontakt mit dem Flachteil auf der einen Seite und dem Terminal der Batteriezelle auf der anderen Seite gewährleistet werden. Die Haltekraft wird insbesondere über eine Federkraft auf das Flachteil ausgeübt. Diese Federkraft bedingt andere Materialeigenschaften als diese, die erforderlich sind, um die Anschlussklemme mit einem Pol oder Terminal einer Batteriezelle zu verbinden. Aus diesem Grunde wird vorgeschlagen, dass die Anschlussklemme bimetallisch ist, wobei ein Anschlussbereich aus einem ersten Metallwerkstoff gebildet ist und ein Aufnahmebereich zumindest teilweise aus einem zweiten, von dem ersten Metallwerkstoff verschiedenen Metallwerkstoff, gebildet ist.

Der Gegenständliche Zellenverbinder samt Anschlussklemme zeichnet sich durch ein geringes Gewicht, guten Leitwert, einen geringen und stabilen Übergangswiderstand aus. Ferner ist der Zellenverbinder zerstörungsfrei demontierbar. Der Fertigungsaufwand ist gering. Die Fertigung kann vollautomatisch erfolgen. Auf die Montage kann vollautomatisch erfolgen.

Durch die Ausgestaltung der Anschlussklemme aus unterschiedlichen Metallwerkstoffen wird der Effekt erzielt, dass die Anschlussklemme Bereichsweise an die verschiedenen Anforderungen, die an sie gestellt wird, angepasst ist. Zum einen kann ein Metallwerkstoff eines ersten Bereichs derart gewählt werden, dass er zum klemmenden Halten des Flachteils geeignet ist. Das klemmende Halten erfordert einen Metallwerkstoff, der besonders gute Federeigenschaften hat. Der hierfür notwendige Metallwerkstoff ist aber nicht geeignet, eine sortenreine Verbindung zu einem Terminal einer Zelle zu bilden und/oder gut stoffschlüssig mit dem Terminal der Klemme verbunden zu werden.

Der andere Metallwerkstoff des weiteren Bereichs kann so gewählt sein, dass er besonders gut mit dem Metallwerkstoff des Terminals/Pols der Batteriezelle kombinierbar und verbindbar ist, insbesondere zur Vermeidung von Kontaktkorrosion. Bei der Verbindung zwischen der Anschlussklemme und dem Terminal der Batteriezelle ist bevorzugt ein sortenreiner Übergang angestrebt. Der hierfür notwendige Metallwerkstoff ist aber nicht geeignet, eine gute Klemmkraft auf das Flachteil auszuüben.

Die Bereiche können ein Anschlussbereich und ein Aufnahmebereich sein. Die Bereiche können entlang der Längsachse des Flachteils aneinander angrenzen. Der Anschlussbereich kann an einem ersten Ende des Flachteils liegen und der Aufnahmebereich an einem diesem gegenüberliegenden Ende des Flachteils.

Es wird vorgeschlagen, dass der Aufnahmebereich aus einem Metallwerkstoff gebildet ist, dessen Verhältnis von Streckgrenze zur Zugfestigkeit über 70%, vorteilhafterweise über 85% liegt.

Die Streckgrenze kann der R_{eL}- oder R_{eH}-Wert sein, die Zugfestigkeit kann der Rₘ-Wert sein. Alle Werte können nach ISO 6892, DIN 50154, ASTME E8 oder ASTM E21 gemessen werden. Die Probengeometrie für die Werkstoffe ergibt sich nach DIN 50125. Durch das geforderte Verhältnis von Streckgrenze zu Zugfestigkeit wird eine gute Federelastizität im Aufnahmebereich erreicht, so dass der Aufnahmebereich das Flachteil besonders gut klemmend aufnehmen kann.

Gemäß einem Ausführungsbeispiel wird vorgeschlagen, dass der Aufnahmebereich aus seinem Federstahl gebildet ist. Hier eignen sich insbesondere Federstähle nach DIN EN 10089, DIN EN 10092, DIN EN 10132 oder DIN EN 10151, insbesondere X10CrNi18-8, 38Si7, 52CrMoV4, 51CrV4, oder 61SiCr7, C67E / C67S.

Der Aufnahmebereich hat besondere mechanische Anforderungen, insbesondere hinsichtlich seiner auf das Flachteil ausgeübten Klemmkraft. Dagegen hat der Anschlussbereich insbesondere Anforderungen an die Verbindbarkeit mit dem Terminal der Batteriezelle. Aus diesem Grunde muss die Anschlussklemme einen Übergang zwischen dem Aufnahmebereich und dem Anschlussbereich aufweisen, um die unterschiedlichen Metallwerkstoffe bereitzustellen. Es wird vorgeschlagen, dass der Aufnahmebereich mit dem Anschlussbereich stirnseitig überlappend verbunden ist. Auch ist es möglich, dass der Aufnahmebereich mit dem Anschlussbereich stirnseitig stumpf verbunden ist. Insbesondere ein stumpfer Stoß zwischen zwei Flachteilen, die einerseits den Anschlussbereich und andererseits den Aufnahmebereich bilden, ist bevorzugt.

Eine besonders gute Leitfähigkeit der Anschlussklemme wird dadurch erreicht, dass der Aufnahmebereich stoffschlüssig mit dem Anschlussbereich verbunden ist. Dafür eignen sich insbesondere Reibschweißverfahren, hier insbesondere ein Ultraschallschweißverfahren. Bevorzugt ist ein Rührreibschweißen als auch ein Ultraschallrollnahtschweißen.

Das Flachteil wird von dem Aufnahmebereich klemmend aufgenommen. Um eine möglichst große Kontaktfläche gewährleisten zu können, wird vorgeschlagen, dass der Aufnahmebereich und der Anschlussbereich jeweils aus einem flachen Metallteil gebildet sind. Hierdurch wird das Flachteil flächig von dem Aufnahmebereich aufgenommen und der Anschlussbereich kann flächig mit einem Terminal der Batteriezelle verbunden werden.

Um eine ausreichend große Klemmkraft auf das Flachteil ausüben zu können, wird vorgeschlagen, dass das Flachteil klemmend in dem Aufnahmebereich aufgenommen wird. Um eine gute Klemmwirkung zu erzielen, wird vorgeschlagen, dass der Aufnahmebereich aus zwei gegenüberliegenden Schenkeln gebildet ist. Die Schenkel bilden bevorzugt ein U, wobei die lichte Weite zwischen den Schenkel geringer ist, als eine Materialstärke des Flachteils. Dies führt zu einer Presspassung zwischen den Schenkeln und dem Flachteil, so dass das Flachteil in seiner montierten Position die Schenkel auseinanderdrückt. Die hierdurch bewirkte Rückstellkraft der Schenkel verursacht das Verklemmen des Flachteils zwischen den Schenkeln.

Zwischen den Schenkeln ist ein Übergangsbereich vorgesehen, der insbesondere in etwa kreisförmig, bevorzugt halbkreisförmig, gebildet ist. Der Übergangsbereich verbindet die einander gegenüberliegenden Schenkel miteinander. In ihrer Längserstreckung überkreuzen sich die Schenkel nicht, so dass die Schenkel auf der dem Übergangsbereich gegenüberliegenden Seite eine Öffnung aufspannen. In diese Öffnung kann das Flachteil eingeschoben werden.

Für eine gute elektrische Leitfähigkeit einerseits, andererseits jedoch geringes Gewicht, wird vorgeschlagen, dass das Flachteil aus einem Aluminiumwerkstoff oder einem beschichteten Aluminiumwerkstoff insbesondere mit einem Kupferwerkstoff beschichteten Aluminiumwerkstoff gebildet ist. Auf der anderen Seite ist es auch möglich, beispielsweise wenn die Anschlussklemme teilweise aus Aluminium gebildet ist, dass das Flachteil aus einem Kupferwerkstoff oder einem beschichteten Kupferwerkstoff, insbesondere mit einem Aluminiumwerkstoff beschichteten Kupferwerkstoff gebildet ist.

Die beiden Schenkel mit dem Übergangsbereich spannen U-förmig den Aufnahmebereich auf. Dabei weisen jeweils innere Oberflächen der Schenkel zueinander. Zumindest eine der inneren Oberflächen der Schenkel hat eine zu dem Flachteil komplementäre, profilierte Oberfläche, so dass insbesondere die innere Oberfläche mit einer Oberfläche des Flachteils nut- und federartig ineinander greift. Dabei kann die innere Oberfläche zumindest einen Vorsprung und/oder eine Ausnehmung aufweisen und das Flachteil jeweils hierzu korrespondierend zumindest eine Ausnehmung und/oder einen Vorsprung. Hierdurch greifen montierten Zustand Flachteil und innere Oberfläche nut- und federartig ineinander.

Auch wird vorgeschlagen, dass zumindest eine innere Oberfläche oder eine an der inneren Oberfläche anliegende Oberfläche des Flachteils zumindest einen Vorsprung aufweist und die jeweils gegenüberliegende innere Oberfläche oder Oberfläche des Flachteils zumindest eine hierzu korrespondierende Aufnahme aufweist.

Gemäß einem Ausführungsbeispiel wird vorgeschlagen, dass der Vorsprung und die Aufnahme eine Längserstreckung aufweisen, welche quer, vorzugsweise senkrecht zur Längserstreckung der Schenkel und/oder parallel zur Längserstreckung des Flachteils verläuft. Hierdurch wird im montierten Zustand sichergestellt, dass Vorsprung und Aufnahme quer zur Einschubrichtung des Flachteils in die Öffnung zwischen den Schenkeln ineinandergreifen.

Für eine gut leitende Verbindung des Batteriezellenverbinders mit einem Terminal einer Zelle, wird vorgeschlagen, dass der Anschlussbereich stoffschlüssig mit dem zu kontaktierenden Terminal (Pol) einer Zelle verbunden ist, insbesondere mittels Laserschweißen oder Ultraschallschweißen, bevorzugt torsionalem Ultraschallschweißen. Sowohl beim Laserschweißen, als auch beim Ultraschallschweißen wird die Schweißenergie sehr gezielt in den Schweißknoten eingeleitet. Die den Schweißknoten umgebende Bereiche werden nicht somit nur wenig erhitzt. Hierdurch wird verhindert, dass die elektrochemische Zelle in der Batteriezelle beschädigt wird.

Für eine besonders gute formschlüssige Verbindung zwischen Flachteil und den Schenkeln des Anschlussteils im verbundenen Zustand wird vorgeschlagen, dass zumindest zwei zueinander parallel verlaufende Vorsprünge und Aufnahmen an den aneinander anliegenden Oberflächen von Flachteil und Schenkel angeordnet sind. Das Flachteil ist bevorzugt nur an einer Oberfläche mit Vorsprung oder Aufnahme versehen, die gegenüberliegende Oberfläche ist bevorzugt plan.

Gemäß einem Ausführungsbeispiel wird vorgeschlagen, dass zumindest zwei im montierten Zustand an einander anliegenden Oberflächen von Flachteil und Schenkel komplementär zueinander verlaufende Vorsprünge und Aufnahmen aufweisen, und dass die Vorsprünge und Aufnahmen quer zu einer Längserstreckung der Schenkel ineinander greifen. Dies führt zu einem guten Formschluss zwischen den Schenkeln und dem Flachteil, so dass im montierten Zustand eine hohe Auszugskraft notwendig ist, um das Flachteil aus der Öffnung zwischen den Schenkeln herauszulösen.

Die Fügezone zwischen dem Anschlussbereich und dem Terminal der Zelle ist bevorzugt entfernt von dem Bereich, in dem die Anschlussklemme mechanisch belastet wird. Daher wird vorgeschlagen, dass eine Fügezone zwischen dem Werkstoff des Anschlussbereichs und dem Werkstoffs des Aufnahmebereichs im Bereich zumindest eines Schenkels oder im Übergangsbereich liegt. Die Anschlussklemme wird im Aufnahmebereich durch das Klemmen des Flachteils mechanisch belastet, insbesondere gedehnt und/oder gestaucht und/oder tordiert wird. Die damit einhergehende mechanische Verformung kann sich negativ auf die Verbindung zwischen der Anschlussklemme und dem Terminal im Anschlussbereich auswirken. Insbesondere können mechanische Zug- und/oder Druckkräfte dazu führen, dass sich die Verbindung mit der Zeit löst. Dies könnte zu einer Unterbrechung der elektrischen Verbindung führen und die Batterie wäre ggf. nicht mehr nutzbar.

Gemäß einem Ausführungsbeispiel wird vorgeschlagen, dass der Anschlussbereich mit dem Terminal der Zelle entfernt von der Fügezone im Aufnahmebereich verbunden ist. Dies führt dazu, dass die Kraft, die beim Fügen des Flachteils in die Öffnung des Aufnahmebereichs eingeleitet wird, nicht in den Anschlussbereich und insbesondere den Bereich, in dem der Anschlussbereich mit dem Terminal der Zelle verbunden ist, eingekoppelt wird.

Die Anschlussklemme ist in einem Längsschnitt bevorzugt hakenförmig. Bevorzugt ist der Anschlussbereich in seiner Längserstreckung über eine Normalprojektion der inneren Oberfläche eines Schenkels auf den Anschlussbereich hinaus ragend. Das bedeutet, dass der Anschlussbereich in seiner Längserstreckung über die Längserstreckung der Schenkel des Aufnahmebereichs hinaus geht. Die Verbindung mit dem Terminal der Zelle liegt außerhalb der durch die Schenkel aufgespannten Fläche.

Gemäß einem Ausführungsbeispiel wird vorgeschlagen, dass die Längserstreckung des Anschlussbereichs mit dem damit verbundenen ersten Schenkel des Aufnahmebereichs größer ist, als die Längserstreckung des zweiten Schenkels des Aufnahmebereichs.

Der Aufnahmebereich kann durch einen Schenkel und Teile des Anschlussbereichs gebildet sein. Über den Übergangsbereich ist der zweite Schenkel des Aufnahmebereichs mit dem ersten Schenkel verbunden. Ausgehend von dem ersten Schenkel erstreckt sich auf der gegenüberliegenden Seite des Übergangsbereichs der Anschlussbereich.

Nachfolgend wird der Gegenstand anhand einer Ausführungsbeispiele zeigenden Zeichnung näher erläutert. In der Zeichnung zeigen:
- Fig. 1a: eine Seitenansicht eines Batteriezellenverbinders mit Batteriezellen;
- Fig. 1b: eine Draufsicht auf einen Batteriezellenverbinders mit Batteriezellen;
- Fig. 2a-e: verschiedene Querschnitte eines Flachteils;
- Fig. 3: eine Draufsicht auf ein Flachteil;
- Fig. 4a-e: Längsschnitte einer Anschlussklemme korrespondierend zu den Flachteilen gemäß Figuren 2a-e;
- Fig. 5: eine Draufsicht auf eine Anschlussklemme.

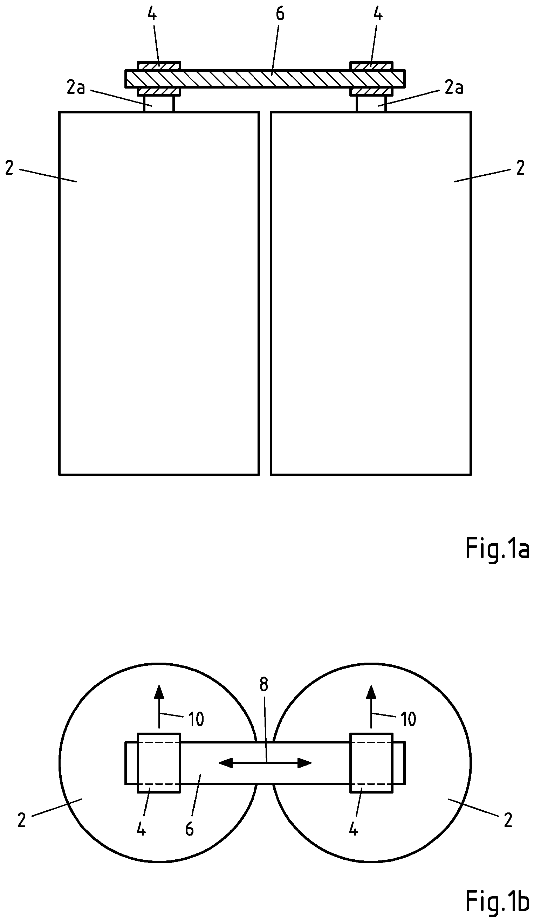

Fig. 1a zeigt zwei Batteriezellen 2, mit jeweils einem Pol 2a. An den Pol angeschweißt ist jeweils eine Anschlussklemme 4. Zwischen den Anschlussklemmen 4 ist ein Flachteil 6 klemmend angeordnet. Ein Stromfluss zwischen den beiden Batteriezellen 2 erfolgt von einem Pol 2a, über eine Anschlussklemme 4, das Flachteil 6 und die jeweils andere Anschlussklemme 4 zu dem anderen Pol 2a.

Fig. 1b zeigt eine Draufsicht auf eine solche Anordnung mit den Anschlussklemmen 4 und dem Flachteil 6.

Im Betrieb ist sicherzustellen, dass das Flachteil 6 sich nicht von den Anschlussklemmen 4 löst. Andererseits kommt es im Betrieb jedoch dazu, dass sich das Flachteil in seiner Längserstreckung 8 durch Wärmeausdehnung ausdehnt oder zusammenzieht. Dieses "swelling" führt zu einer mechanischen Belastung der Anschlussklemmen, wenn das Flachteil 6 fest mit den Anschlussklemmen 4 verbunden ist.

Gegenständlich wird das Flachteil 6 jedoch mit einem Freiheitsgrad entlang der Längserstreckung 8 an der Anschlussklemme klemmend befestigt, so dass sich das Flachteil 6 entlang seiner Längserstreckung 8 in den Anschlussklemmen 4 bewegen, ausdehnen und/oder zusammenziehen kann. In einer Richtung 10 senkrecht zur Längserstreckung 8 ist das Flachteil 6 dabei aber zumindest formschlüssig in den Anschlussklemmen 4 gehalten. In der Richtung 10 kann das Flachteil 6 aus der Anschlussklemme 4 entfernt werden.

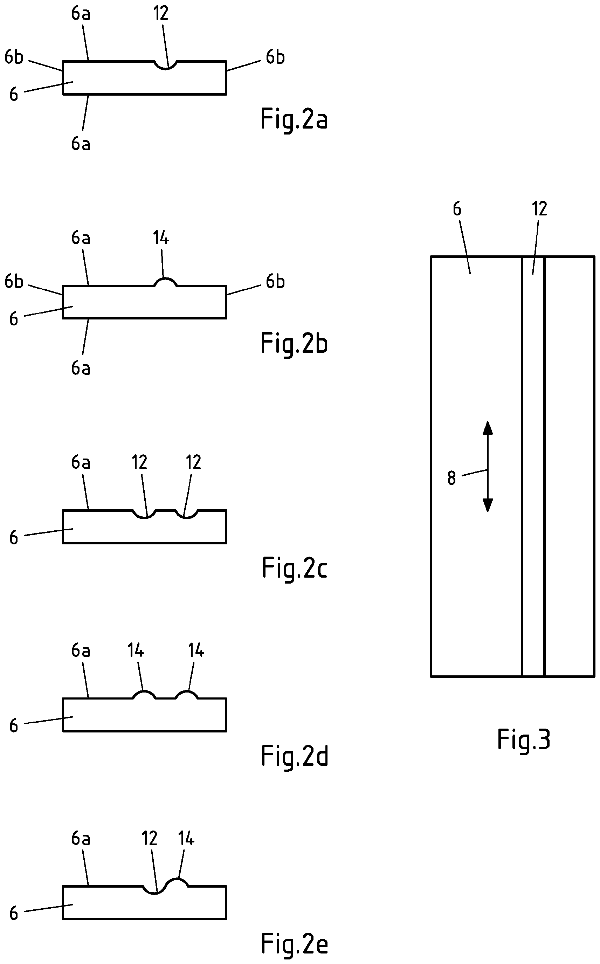

Ein Schnitt parallel zur Richtung 10 durch das Flachteil 6 zeigen die Figuren 2a-e. Das Flachteil 6 hat zwei breite Oberflächen 6a und zwei schmale Oberflächen 6b. Auf zumindest einer breiten Oberfläche 6a ist eine Ausnehmung 12 oder ein Vorsprung 14 vorgesehen. Dies ist in den Figuren 2a und b gezeigt.

Auch können zwei Ausnehmungen 12 bzw. zwei Vorsprünge 14 an einer breiten Oberfläche 6a, wie in den Figuren 2c und d gezeigt ist, vorgesehen sein. Auch ist es möglich, dass an einer breiten Oberfläche 6a sowohl eine Ausnehmung 12 als auch ein Vorsprung 14 vorgesehen ist, wie in der Fig. 2e gezeigt.

Es versteht sich, dass auch mehr als zwei Ausnehmungen 12 und/oder Vorsprünge 14 auf einer breiten Oberfläche 6a vorgesehen sein können. Auch können die Ausnehmungen 12 und Vorsprünge 14 auf den gegenüberliegenden breiten Oberflächen 6a gleichzeitig angeordnet sein.

Eine Draufsicht auf ein Flachteil 6 zeigt die Fig. 3. Zu erkennen ist, dass sich die Ausnehmung 12 entlang der Längserstreckung 8 des Flachteils 6 ausdehnt.

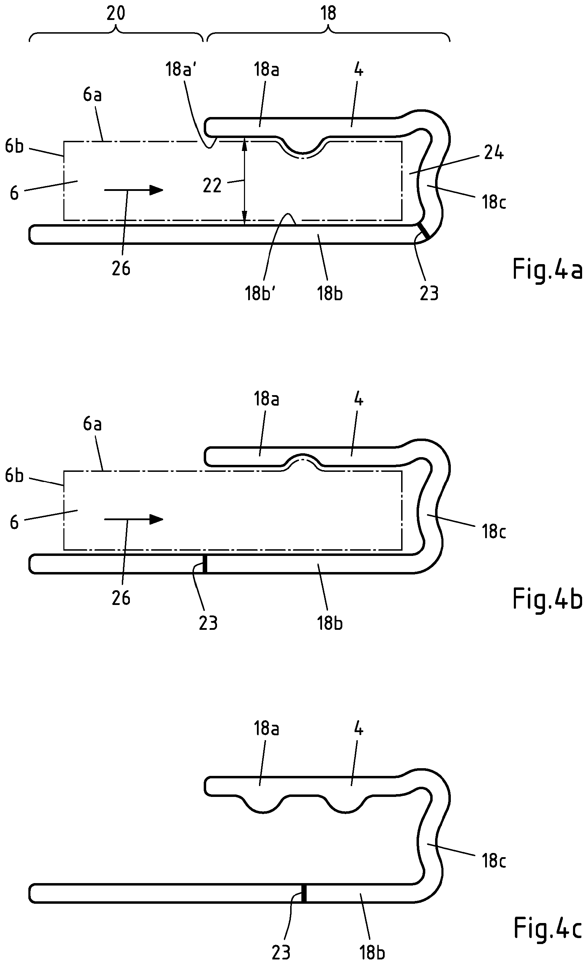

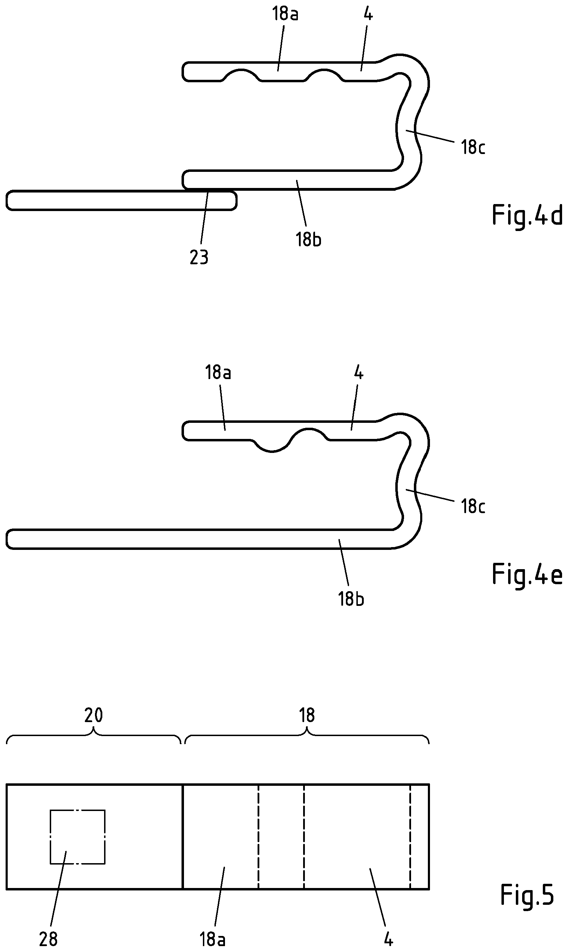

Die Figuren 4a bis e zeigen verschiedene Anschlussklemmen 16, die zu den jeweiligen Flachteilen 6 der Figuren 2a-e korrespondieren.

Eine Anschlussklemme 16 hat dabei einen Aufnahmebereich 18 als auch einen Anschlussbereich 20. Der Aufnahmebereich 18 ist durch zwei Schenkel 18a, 18b sowie einem Übergangsbereich 18c gebildet. Der Übergangsbereich 18c verbindet die beiden Schenkel 18a, 18b miteinander. Die Schenkel 18a, 18b haben einander zugewiesene innere Oberflächen 18a', 18b'. Die lichte Weite 22 zwischen den inneren Oberflächen 18a', 18b' ist bevorzugt kleiner als die Erstreckung des Flachteils 6 entlang seiner schmalen Oberfläche 6b.

Die Anschlussklemme 16 ist aus zwei unterschiedlichen Metallwerkstoffen gebildet, wobei der Aufnahmebereich 18, insbesondere die Schenkel 18a, 18b als auch der Übergangsbereich 18c zumindest in Teilen aus einem ersten Metallwerkstoff gebildet sind und der Anschlussbereich 20 zumindest in Teilen aus einem zweiten metallischen Metallwerkstoff gebildet ist. Eine Fügezone 23 zwischen den verschiedenen Metallwerkstoffen kann, wie in der Fig. 4a gezeigt, an einem Übergang zwischen dem Schenkel 18b und dem Übergangsbereich 18c sein. Auch kann eine Fügezone 23 am Übergang zwischen dem Aufnahmebereich 18 und dem Anschlussbereich 20 sein, wie in der Fig. 4b gezeigt. Auch kann eine Fügezone 23 im Bereich des Schenkels 18b liegen, wie in der Fig. 4c gezeigt. Die Fügezone 23 kann auch in einem Überlappungsbereich liegen, wie in der Fig. 4d gezeigt. Die Fügezone ist bevorzugt so angeordnet, dass sie frei von einer mechanischen Belastung durch die Federspannung der Schenkel ist.

Der Metallwerkstoff, aus dem zumindest einer der Schenkel 18a und der Übergangsbereich 18c gebildet ist, ist bevorzugt ein Federstahl, wohingegen der Metallwerkstoff, aus dem der Anschlussbereich 20 gebildet ist, sich gut für eine stoffschlüssige Verbindung mit dem Terminal 2a der Batteriezelle 2 eignet.

Zu Erzielung einer guten Klemmkraft auf das Flachteil 6 hat der Übergangsbereich 18c eine in Richtung der Öffnung 24 zwischen den Schenkeln 18a, 18b geneigte Wölbung. Die Biegeradien zwischen den Schenkeln 18a, b und dem Übergangsbereich 18c sind entgegengesetzt zum Biegeradius der Wölbung des Übergangsbereichs 18c. Ausgehend von dem Schenkel 18a kann der Übergangsbereich 18c zunächst in einer Richtung von dem Schenkel 18b wegweisend gebogen sein sein. In einem engen Biegeradius kann der Übergangsbereich 18c dann in Richtung des Schenkels 18b gebogen sein. Somit hat der Übergangsbereich einen nach oben weisenden "Kopf", welcher aus der oberen Ebene des Schenkels 18a heraus ragt.

Im Anschluss kann der Übergangsbereich 18c in einem weiten Biegeradius in Richtung der Öffnung 24 gewölbt sein. Ausgehend hiervon kann der Übergangsbereich 18c wieder in einem engen Biegeradius in Richtung des Anschlussbereichs 20 gebogen sein und sich in den Schenkel 18b erstrecken.

Durch diese Mehrfachbiegung im Übergangsbereich wird eine besonders gute Klemmwirkung des Aufnahmebereichs 18 erreicht.

Zur Montage wird das Flachteil 6 in Einschubrichtung 26 in die Öffnung 24 eingeschoben. Dabei werden die Schenkel 18a, 18b auseinander gespreizt. Die dadurch bewirkte Rückstellkraft führt zu einer Federkraft auf die breiten Oberflächen 6a des Flachteils 6, so dass dieses klemmend zwischen den Schenkeln 18a, 18b gehalten ist.

Durch diese mechanische Spannung kommt es zu einer mechanischen Belastung der Schenkel 18a, 18b. Es muss vermieden werden, dass diese mechanische Belastung auf die stoffschlüssige Verbindung zwischen dem Pol 2a und dem Anschlussbereich 20 ausstrahlt. Aus diesem Grunde ragt, wie in der Fig. 5 gezeigt, der Anschlussbereich 20 über den Aufnahmebereich 18 hinaus. Insbesondere eine Normalprojektion der Schenkel 18a, 18b aufeinander zeigt, dass der Anschlussbereich 20 länger ist, als der längste der beiden Schenkel 18a, 18b. In dem Anschlussbereich ist eine Zone 28, an der eine stoffschlüssige Verbindung zwischen dem Terminal 2a und der Anschlussklemme 4 erfolgt.

Die Figuren 4b-e zeigen verschiedenartigste Anschlussklemmen 4 die zur Aufnahme der hierzu korrespondierenden Flachteile gemäß den Figuren 2b-e ausgestaltet sind.

### Bezugszeichenliste

- 2: Batteriezelle
- 2a: Terminal
- 4: Anschlussklemme
- 6: Flachteil
- 6a: breite Oberfläche
- 6b: schmale Oberfläche
- 8: Längserstreckung
- 10: Querrichtung
- 12: Ausnehmung
- 14: Vorsprung
- 18: Aufnahmebereich
- 18a,b: Schenkel
- 18c: Übergangsbereich
- 20: Anschlussbereich
- 22: lichte Weite
- 23: Fügezone
- 24: Öffnung
- 26: Einschubrichtung

## Patentansprüche

1. Batteriezellenverbinder mit
- zumindest zwei Anschlussklemmen (4) mit jeweils einem Aufnahmebereich (18) und einem Anschlussbereich (20), und
- zumindest einem Flachteil (6), wobei
- der Aufnahmebereich (18) zumindest einer der Anschlussklemmen (4) zum klemmenden Aufnehmen des Flachteils (6) eingerichtet ist und der Anschlussbereich (20) zumindest einer der Anschlussklemmen (4) zum stoffschlüssigen Verbinden mit einem Pol einer Batteriezelle (2) eingerichtet ist, **dadurch gekennzeichnet,**
- **dass** die Anschlussklemme (4) bimetallisch ist, wobei der Anschlussbereich (20) zumindest teilweise aus einem ersten Metallwerkstoff gebildet ist und der Aufnahmebereich (18) zumindest teilweise aus einem zweiten, von dem ersten Metallwerkstoff verschiedenen Metallwerkstoff gebildet ist.

2. Batteriezellenverbinder nach Anspruch 1,
**dadurch gekennzeichnet,**
- **dass** der Aufnahmebereich (18) zumindest teilweise aus einem Metallwerkstoff gebildet ist, dessen Verhältnis von Streckgrenze zur Zugfestigkeit über 70 %, vorteilhafterweise über 85 % liegt und/ oder
- **dass** der Aufnahmebereich (18) zumindest teilweise aus einem Federstahl, insbesondere nach DIN EN 10089, DIN EN 10092, DIN EN 10132 oder DIN EN 10151, insbesondere aus X10CrNi18-8, 38Si7, 52CrMoV4, 51CrV4, oder 61SiCr7, C67E / C67S gebildet ist.

3. Batteriezellenverbinder nach einem der vorangehenden Ansprüche,
**dadurch gekennzeichnet,**
- **dass** der Aufnahmebereich mit dem Anschlussbereich überlappend verbunden ist, oder dass der Aufnahmebereich mit Anschlussbereich stirnseitig über einen stumpfen Stoß verbunden ist.

4. Batteriezellenverbinder nach einem der vorangehenden Ansprüche,
**dadurch gekennzeichnet,**
- **dass** der Aufnahmebereich mit dem Anschlussbereich stoffschlüssig, insbesondere mittels Reibschweißen, vorzugsweise Rührreibschweißen, Ultraschallschweißen, vorzugsweise Ultraschallrollnahtschweißen verbunden ist.

5. Batteriezellenverbinder nach einem der vorangehenden Ansprüche,
**dadurch gekennzeichnet,**
- **dass** der Aufnahmebereich und der Anschlussbereich jeweils aus einem flachen Metallteil gebildet sind und/ oder
- **dass** der Aufnahmebereich aus zwei gegenüberliegenden Schenkeln gebildet ist, wobei die lichte Weite zwischen den Schenkeln geringer ist, als eine Materialstärke des Flachteils.

6. Batteriezellenverbinder nach einem der vorangehenden Ansprüche,
**dadurch gekennzeichnet,**
- **dass** der Aufnahmebereich aus zwei gegenüberliegenden Schenkeln und einem die Schenkel miteinander verbindenden Übergangsbereich gebildet ist, wobei der Übergangsbereich einer durch die Schenkel aufgespannten Öffnung gegenüberliegt.

7. Batteriezellenverbinder nach einem der vorangehenden Ansprüche,
**dadurch gekennzeichnet,**
- **dass** das Flachteil (6) aus einem Aluminiumwerkstoff oder einem beschichteten Aluminiumwerkstoff, insbesondere mit einem Kupferwerkstoff beschichteten Aluminiumwerkstoff gebildet ist oder das Flachteil (6) aus einem Kupferwerkstoff oder einem beschichteten Kupferwerkstoff, insbesondere mit einem Aluminiumwerkstoff beschichteten Kupferwerkstoff gebildet ist.

8. Batteriezellenverbinder nach einem der vorangehenden Ansprüche,
**dadurch gekennzeichnet,**
- **dass** die Schenkel (18a. b) jeweils eine innere Oberfläche aufweisen, die dem jeweils in Richtung des anderen Schenkels zuweisen, wobei insbesondere zumindest eine innere Oberfläche mit dem Flachteil (6) nut- und federartig ineinandergreift.

9. Batteriezellenverbinder nach einem der vorangehenden Ansprüche,
**dadurch gekennzeichnet,**
- **dass** zumindest eine innere Oberfläche oder eine an der inneren Oberfläche anliegende Oberfläche des Flachteils (6) einen Vorsprung (14) aufweist und die jeweils gegenüberliegende innere Oberfläche oder Oberfläche des Flachteils (6) eine hierzu korrespondierende Aufnahme aufweist und/ oder
- **dass** der Vorsprung (14) und die Aufnahme eine Längserstreckung (8) aufweisen, welche quer, bevorzugt senkrecht zur Längserstreckung (8) der Schenkel (18 a, b) und/oder parallel zur Längserstreckung (8) des Flachteils (6) verläuft.

10. Batteriezellenverbinder nach einem der vorangehenden Ansprüche,
**dadurch gekennzeichnet,**
- **dass** der Anschlussbereich (20) stoffschlüssig mit dem zu kontaktierenden Pol einer Zelle verbunden ist, insbesondere mittels Laserschweißen oder Ultraschallschweißen, bevorzugt torsionalem Ultraschallschweißen.

11. Batteriezellenverbinder nach Anspruch 9,
**dadurch gekennzeichnet,**
- **dass** zumindest zwei zueinander parallel verlaufende Vorsprünge (14) und Aufnahmen an den einander anliegenden Oberflächen von Flachteil (6) und Schenkel (18a, b) angeordnet sind und/ oder
- **dass** der zumindest eine Vorsprung (14) oder die zumindest eine Aufnahme in nur einer Oberfläche des Flachteils (6) angeordnet ist.

12. Batteriezellenverbinder nach einem der Ansprüche 9, 11,
**dadurch gekennzeichnet,**
- **dass** zumindest zwei im montierten Zustand aneinander anliegenden Oberflächen von Flachteil (6) und Schenkel (18a, b) komplementär zueinander verlaufende Vorsprünge (14) und Aufnahmen aufweisen und dass die Vorsprünge (14) und Aufnahmen quer zu einer Längserstreckung (8) der Schenkel (18a, b) ineinandergreifen.

13. Batteriezellenverbinder nach einem der vorangehenden Ansprüche,
**dadurch gekennzeichnet,**
- **dass** eine Fügezone (23) zwischen dem Werkstoff des Anschlussbereichs (20) und dem Werkstoff des Aufnahmebereichs (20) im Bereich zumindest eines Schenkel (18a, b) oder im Übergangsbereich (18c) liegt und/ oder
- **dass** der Anschlussbereich (20) mit dem Pol der Zelle entfernt von der Fügezone (23) verbunden ist.

14. Batteriezellenverbinder nach einem der vorangehenden Ansprüche,
**dadurch gekennzeichnet,**
- **dass** der Anschlussbereich (20) in seiner Längserstreckung (8) über eine Normalprojektion der inneren Oberfläche auf den Anschlussbereich (20) hinaus ragt und insbesondere dass die Verbindung mit dem Pol der Zelle außerhalb der Normalprojektion der inneren Oberfläche auf den Anschlussbereich (20) liegt.

15. Batteriezellenverbinder nach einem der vorangehenden Ansprüche,
**dadurch gekennzeichnet,**
- **dass** die Längserstreckung (8) des Anschlussbereichs (20) mit dem damit verbundenen ersten Schenkel (18a) des Aufnahmebereichs größer ist, als die Längserstreckung (8) des zweiten Schenkels (18b) des Aufnahmebereichs.

## Claims

1. Battery cell connector with
- at least two terminal clamps (4), each with a receiving area (18) and a connection area (20), and
- at least one flat part (6), wherein
- the receiving area (18) of at least one of the terminal clamps (4) is arranged to clampingly receive the flat part (6), and the connection area (20) of at least one of the terminal clamps (4) is arranged to connect to be materially bonded to one pole of a battery cell,
**characterized in that**,
- the terminal clamp (4) is bimetallic, wherein the connection area (20) is formed at least partially from a first metal material and the receiving area (18) is formed at least partially from a second metal material different from the first metal material.

2. Battery cell connector according to claim 1,
**characterized in that**,
- the receiving area (18) is at least partially formed from a metallic material whose ratio of yield strength to tensile strength is above 70%, advantageously above 85% and/or
- the receiving area (18) is at least partially formed from a spring steel, in particular according to DIN EN 10089, DIN EN 10092, DIN EN 10132 or DIN EN 10151, in particular from X10CrNi18-8, 38Si7, 52CrMoV4, 51CrV4, or 61SiCr7, C67E / C67S.

3. Battery cell connector according to one of the preceding claims,
**characterized in that**,
- the receiving area is connected to the connection area with an overlap, or that the receiving area is butt-jointed to the connection area at the front end.

4. Battery cell connector according to one of the preceding claims,
**characterized in that**,
- the receiving area is joined to the connection area in a material bond, in particular by means of friction welding, preferably friction stir welding, ultrasonic welding, preferably ultrasonic roll seam welding.

5. Battery cell connector according to one of the preceding claims,
**characterized in that**,
- the receiving area and the connection area are each formed from a flat metal part and/or
- the receiving area is formed by two opposing legs, the clear span between the legs being less than a material thickness of the flat part.

6. Battery cell connector according to one of the preceding claims,
**characterized in that**,
- **in that** the receiving area is formed from two opposing legs and a transition area connecting the legs to each other, the transition area being opposite an opening spanned by the legs.

7. Battery cell connector according to one of the preceding claims,
**characterized in that**,
- the flat part (6) is formed from an aluminium material or a coated aluminium material, in particular aluminium material coated with a copper material, or the flat part (6) is formed from a copper material or a coated copper material, in particular a copper material coated with an aluminium material.

8. Battery cell connector according to one of the preceding claims,
**characterized in that**,
- the legs (18a,b) each have an inner surface which faces towards the other leg, wherein in particular at least one inner surface engaging with the flat part (6) in a tongue-and-groove fashion.

9. Battery cell connector according to one of the preceding claims,
**characterized in that**,
- at least one inner surface or a surface of the flat part (6) lying against the inner surface has a projection (14) and the respective opposite inner surface or surface of the flat part (6) has a recess corresponding thereto and/or
- the projection (14) and the recess have a longitudinal extent (8) which is transverse, preferably perpendicular to the longitudinal extent (8) of the legs (18a,b) and/or parallel to the longitudinal extent (8) of the flat part (6).

10. Battery cell connector according to one of the preceding claims,
**characterized in that**,
- the connection area (20) is connected to the pole of a cell to be contacted in a material bond, in particular by means of laser welding or ultrasonic welding, preferably by torsional ultrasonic welding.

11. Battery cell connector according claim 9,
**characterized in that**,
- at least two projections (14) and recesses running parallel to one another are arranged on the surfaces of the flat part (6) and the legs (18a,b) that lie against one another and/or
- the at least one projection (14) or the at least one receptacle is arranged in only one surface of the flat part (6).

12. Battery cell connector according to one of the claims 9, 11,
**characterized in that**,
- at least two surfaces of the flat part (6) and leg (18a,b) which, in the assembled state, lie against one another, have projections (14) and recesses running in a complementary manner to one another, and **in that** the projections (14) and recesses interlock transversely to a longitudinal extent (8) of the legs (18a,b).

13. Battery cell connector according to one of the preceding claims,
**characterized in that**,
- a joining zone (23) between the material of the connection area (20) and the material of the receiving area (18) is located in the area of at least one leg (18a,b) or in the transition area (18c) and/or
- the connection area (20) is connected to the pole of the cell away from the joining zone (23).

14. Battery cell connector according to one of the preceding claims,
**characterized in that**,
- the connection area projects (20) in its longitudinal extent (8) beyond a normal projection of the inner surface onto the connection area (20) and in particular **in that** the connection with the pole of the cell lies outside the normal projection of the inner surface onto the connection area (20).

15. Battery cell connector according to one of the preceding claims,
**characterized in that**,
- the longitudinal extent (8) of the connection area (20) with the connected first leg (18a) of the receiving area is greater than the longitudinal extent (8) of the second leg (18b) of the receiving area

## Revendications

1. Connecteur de cellule de batterie avec
- au moins deux bornes de connexion (4) ayant chacune une zone de réception (18) et une zone de connexion (20), et
- au moins une partie plate (6),
- la zone de réception (18) d'au moins une des bornes de connexion (4) étant configurée pour recevoir la partie plate (6) de manière serrée et la zone de connexion étant configurée pour une connexion par complémentarité de matière à un pôle d'une cellule de batterie (2),
**caractérisé**
- **en ce que** la borne de connexion (4) est bimétallique, la zone de connexion (20) étant formée au moins partiellement d'un premier matériau métallique et la zone de réception (18) étant formée au moins partiellement d'un deuxième matériau métallique qui est différent du premier matériau métallique.

2. Connecteur de cellule de batterie selon la revendication 1, **caractérisé**
- **en ce que** la zone de réception (18) est au moins partiellement formée d'un matériau métallique dont le rapport entre la limite d'élasticité et la résistance à la traction est supérieur à 70 %, avantageusement supérieur à 85 %, et/ou
- **en ce que** la zone de réception (18) est formée au moins partiellement d'un acier à ressort, en particulier selon la norme DIN EN 10089, DIN EN 10092, DIN EN 10132 ou DIN EN 10151, notamment en X10CrNi18-8, 38Si7, 52CrMoV4, 51CrV4 ou 61SiCr7, C67E / C67S.

3. Connecteur de cellule de batterie selon l'une des revendications précédentes, **caractérisé en ce que** la zone de réception est reliée à la zone de connexion de manière chevauchante, ou **en ce que** la zone de réception est reliée à la zone de connexion au niveau de la face frontale par un joint bout à bout.

4. Connecteur de cellule de batterie selon l'une des revendications précédentes, **caractérisé en ce que** la zone de réception est reliée à la zone de connexion par liaison de matière, en particulier au moyen d'un soudage par friction, de préférence un soudage par friction-malaxage, d'un soudage par ultrasons, de préférence un soudage par ultrasons à la molette.

5. Connecteur de cellule de batterie selon l'une des revendications précédentes, **caractérisé**
- **en ce que** la zone de réception et la zone de connexion sont formées chacune d'une partie métallique plate et/ou
- **en ce que** la zone de réception est formée de deux branches opposées,
- la largeur libre entre les branches étant inférieure à une épaisseur du matériau de la partie plate.

6. Connecteur de cellule de batterie selon l'une des revendications précédentes, **caractérisé en ce que** la zone de réception est formée de deux branches opposées et d'une zone de transition reliant les branches l'une à l'autre, la zone de transition faisant face à une ouverture tenue ouverte en tension par les branches.

7. Connecteur de cellule de batterie selon l'une des revendications précédentes, **caractérisé**
- **en ce que** la partie plate (6) est formée d'un matériau d'aluminium ou d'un matériau d'aluminium revêtu, en particulier d'un matériau d'aluminium revêtu d'un matériau de cuivre, ou
- **en ce que** la partie plate (6) est formée d'un matériau de cuivre ou d'un matériau de cuivre revêtu, en particulier d'un matériau de cuivre revêtu d'un matériau d'aluminium.

8. Connecteur de cellule de batterie selon l'une des revendications précédentes, **caractérisé en ce que** les branches (18a. b) présentent chacune une surface intérieure dirigée vers l'autre branche, en particulier au moins une surface intérieure s'engageant réciproquement avec la partie plate (6) à la manière d'une languette et d'une rainure.

9. Connecteur de cellule de batterie selon l'une des revendications précédentes, **caractérisé**
- **en ce qu'**au moins une surface intérieure ou une surface de la partie plate (6) qui s'appuie sur la surface intérieure présente une saillie (14), et la surface intérieure ou la surface de la partie plate (6) respectivement opposée présente un logement correspondant, et/ou
- **en ce que** la saillie (14) et le logement présentent une étendue longitudinale (8) qui s'étend transversalement, de préférence perpendiculairement, à l'étendue longitudinale (8) des branches (18a, b) et/ou parallèlement à l'étendue longitudinale (8) de la partie plate (6).

10. Connecteur de cellule de batterie selon l'une des revendications précédentes, **caractérisé en ce que** la zone de connexion (20) est reliée au pôle d'une cellule à mettre en contact par liaison de matière, notamment par soudage laser ou soudage par ultrasons, de préférence par soudage par ultrasons en torsion.

11. Connecteur de cellule de batterie selon la revendication 9, **caractérisé**
- **en ce qu'**au moins deux saillies (14) et logements s'étendant parallèlement les uns aux autres sont disposés au niveau des surfaces mutuellement adjacentes de la partie plate (6) et des branches (18a, b) et/ou
- **en ce que** l'au moins une saillie (14) ou l'au moins un logement est disposé dans une seule surface de la partie plate (6).

12. Connecteur de cellule de batterie selon l'une des revendications 9, 11, **caractérisé**
- **en ce qu'**au moins deux surfaces de la partie plate (6) et des branches (18a, b) adjacentes l'une à l'autre à l'état assemblé présentent des saillies (14) et des logements qui s'étendent de manière complémentaire les uns par rapport aux autres, et
- **en ce que** les saillies (14) et les logements s'engageant réciproquement l'un avec l'autre, transversalement à une étendue longitudinale (8) des branches (18a, b).

13. Connecteur de cellule de batterie selon l'une des revendications précédentes, **caractérisé**
- **en ce qu'**une zone de jonction (23) entre le matériau de la zone de connexion (20) et le matériau de la zone de réception (20) est située dans la zone d'au moins une branche (18a, b) ou dans la zone de transition (18c), et/ou
- **en ce que** la zone de réception (20) est reliée au pôle de la cellule à une distance éloignée de la zone de jonction (23).

14. Connecteur de cellule de batterie selon l'une des revendications précédentes, **caractérisé**
- **en ce que** la zone de raccordement (20) fait saillie dans son étendue longitudinale (8) au-delà d'une projection normale de la surface intérieure sur la zone de réception (20), et en particulier
- **en ce que** la liaison avec le pôle de la cellule se trouve en dehors de la projection normale de la surface intérieure sur la zone de réception (20).

15. Connecteur de cellule de batterie selon l'une des revendications précédentes, **caractérisé**
- **en ce que** l'étendue longitudinale (8) de la zone de réception (20) avec la première branche (18a) de la partie de réception connectée à celle-ci est supérieure à l'étendue longitudinale (8) de la seconde branche (18b) de la partie de réception.
